# EUROPÄISCHE PATENTSCHRIFT

(11) **EP 4 102 195 B1**
(45) Veröffentlichungstag und Bekanntmachung des Hinweises auf die Patenterteilung: **08.01.2025**
(21) Anmeldenummer: 21178836.9
(22) Anmeldetag: 10.06.2021
(51) Int. Cl.: G01F 23/284, G01S 13/42, G01S 13/88

(54) **FÜLLSTANDMESSGERÄT ZUR ÜBERWACHUNG DER OBERFLÄCHENTOPOLOGIE EINES SCHÜTTGUTS**
FILL LEVEL MEASURING DEVICE FOR MONITORING THE SURFACE TOPOLOGY OF A BULK MATERIAL
DISPOSITIF DE MESURE DE NIVEAU DE REMPLISSAGE DESTINÉ À LA SURVEILLANCE DE LA TOPOLOGIE DE SURFACE D'UNE MARCHANDISE EN VRAC

(43) Veröffentlichungstag der Anmeldung: 14.12.2022
(73) Patentinhaber: VEGA Grieshaber KG, 77709 Wolfach (DE)
(72) Erfinder: BURGERT, Florian, 77723 Gengenbach (DE)
(74) Vertreter: Maiwald GmbH

(56) Entgegenhaltungen:
- EP-A1- 2 803 952
- EP-A1- 3 467 450
- WO-A1-2017/137832

## Beschreibung

### Gebiet der Erfindung

Die Erfindung betrifft ein Füllstandmessgerät zur Überwachung der Oberflächentopologie eines Schüttguts, eine externe Steuer- und Auswerteeinheit für ein derartiges Füllstandmessgerät, ein Verfahren zur Überwachung der Oberflächentopologie eines Schüttguts, ein Programmelement und ein computerlesbares Medium.

### Technischer Hintergrund

Schüttgüter werden in Silos oder auf Schütthalden gelagert. Die Silos weisen einen oder mehrere Einlässe auf, durch welche sie befüllt werden können, sowie einen oder mehrere Auslässe, um das Silo zu entleeren. Sowohl bei der Befüllung als auch bei der Entleerung wird es im Regelfall zu Unregelmäßigkeiten in der Oberfläche des Schüttguts kommen, typischer Weise in Form von Schüttkegeln oder Abzugstrichtern.

Möchte man nun das Volumen des im Silo gelagerten Schüttguts bestimmen, empfiehlt sich eine Abtastung der Schüttgutoberfläche, um die Topologie der Oberfläche zu bestimmen und daraus das Volumen mit ausreichender Genauigkeit zu bestimmen. Die Topologiemessdaten können an eine externe Steuer- und Auswerteeinheit übertragen werden, welche die Volumenberechnung vornimmt und die Befüll- und Entleerungsvorgänge des Silos steuert.

EP 2 803 952 A1 beschreibt eine Messgerätesteuerung zur Bestimmung einer Topologie einer Oberfläche eines Schüttguts, welche eine Serie an Echokurven unter verschiedenen Hauptabstrahlrichtungen der Antenne erfasst. Die Hauptabstrahlrichtungen der Antenne werden hierbei derart geändert, dass sämtliche erzeugte Echokurven der Serie von Echokurven zur Bestimmung der Topologie der Schüttgutoberfläche verwendbar sind.

Es ist eine Aufgabe der vorliegenden Erfindung, ein alternatives Füllstandmessgerät anzugeben, das zur effizienten Überwachung der Oberflächentopologie eines Schüttguts eingerichtet ist.

Diese Aufgabe wird durch die Gegenstände der unabhängigen Patentansprüche gelöst. Weiterbildungen der Erfindung ergeben sich aus den Unteransprüchen und der folgenden Beschreibung von Ausführungsformen.

Ein erster Aspekt der vorliegenden Offenbarung betrifft ein Füllstandmessgerät, das zur Überwachung der Oberflächentopologie eines Schüttguts oder einer Flüssigkeit eingerichtet ist. Es weist eine Sensoreinheit auf, die eingerichtet ist zum Abscannen eines ersten Bereichs der Oberfläche des Schüttguts, sowie zum Abscannen eines zweiten Bereichs der Oberfläche des Schüttguts.

Es ist darüber hinaus eine Auswerteeinheit vorgesehen, die eingerichtet ist zum Berechnen eines ersten Volumens und/oder einer ersten Masse und/oder einer ersten durchschnittlichen Füllhöhe desjenigen Teils des Schüttguts, der sich unter dem ersten Bereich der Oberfläche des Schüttguts befindet, und eines zweiten Volumens und/oder einer ersten Masse und/oder einer zweiten durchschnittlichen Füllhöhe eines anderen Teils des Schüttguts, der sich nämlich unter dem zweiten Bereich der Oberfläche des Schüttguts befindet.

Die Begriffe "Sensoreinheit" und Auswerteeinheit" sind breit auszulegen.

Bei dem Füllstandmessgerät kann es sich beispielsweise um ein Füllstandradarmessgerät handeln, und insbesondere um ein Füllstandradarmessgerät, welches die gesamte Oberfläche des Schüttguts abscannen kann. Grundsätzlich kann es sich dabei auch um ein Messgerät handeln, das auf einer anderen Technologie basiert, beispielsweise ein optisches Messgerät oder ein Ultraschallmessgerät. Wesentlich ist die Fähigkeit des Geräts, einzelne vorbestimmbare Bereiche der Schüttgutoberfläche nacheinander abzutasten.

Das Füllstandmessgerät ermöglicht somit eine Profilerfassung, beispielsweise mittels Radartechnologie, als Ersatz von Einpunktmessungen. Somit kann vermieden werden, dass eine ungleichmäßige Ausbildung der Oberfläche des Schüttguts, die beim Befüllen oder Entleeren auftreten kann, das Messergebnis nicht verfälscht.

Insbesondere kann das Füllstandmessgerät mit Zweileiter-Technologie versehen sein, also etwa zum Anschluss an eine 4 bis 20 mA HART-Schnittstelle eingerichtet sein. In diesem Fall ist die Datenmenge, die vom Füllstandmessgerät versendet werden kann, stark limitiert. Dadurch, dass die Oberfläche des Schüttguts in Bereiche, beziehungsweise Segmente aufgeteilt wird und für jeden Bereich der Oberfläche das darunterliegende Volumen und/oder die durchschnittliche Füllhöhe berechnet wird, kann die Menge an an eine externe Steuer- und Auswerteeinheit zu übertragenden Daten wirksam reduziert werden.

Gemäß einer weiteren Ausführungsform ist die Sensoreinheit eingerichtet, den ersten Bereich mit einer ersten Auflösung abzuscannen und den zweiten Bereich mit einer zweiten Auflösung abzuscannen, die geringer ist als die erste Auflösung.

Somit können bei der Messung und der späteren Datenauswertung Energie und Rechenleistung eingespart werden, da bestimmte Bereiche der Schüttgutoberfläche, die sich beispielsweise im Vergleich zur vorherigen Messung nicht oder kaum geändert haben, mit geringerer Auflösung abgescannt werden können als Bereiche, in denen eine große Änderung erfolgt ist oder zu erwarten ist.

Gemäß einer weiteren Ausführungsform weist der erste Bereich eine andere Größe auf als der zweite Bereich. Beispielsweise ist er größer.

Gemäß einer weiteren Ausführungsform weist der erste Bereich eine andere Form auf als der zweite Bereich.

Das Füllstandmessgerät kann selbstlernend ausgeführt sein und beobachten, unter welchen Umständen sich welche Bereiche der Schüttgutoberfläche stark verändern und welche Bereiche sich weniger oder gar nicht verändern. Ein Beispiel hierfür ist die Bildung eines Abzugstrichters, bei der sich der ringförmige Bereich um den Trichter herum nicht ändert. Kommt es also zu der Bildung eines Abzugstrichters kann der erste Bereich kreisförmig gewählt werden und der zweite Bereich ringförmig um den ersten Bereich. Die Auflösung der Abtastung im zweiten Bereich kann geringer ausfallen als die im ersten Bereich. Insbesondere kann das Füllstandmessgerät eingerichtet sein, Größe und Form der unterschiedlichen Bereiche regelmäßig zu ändern.

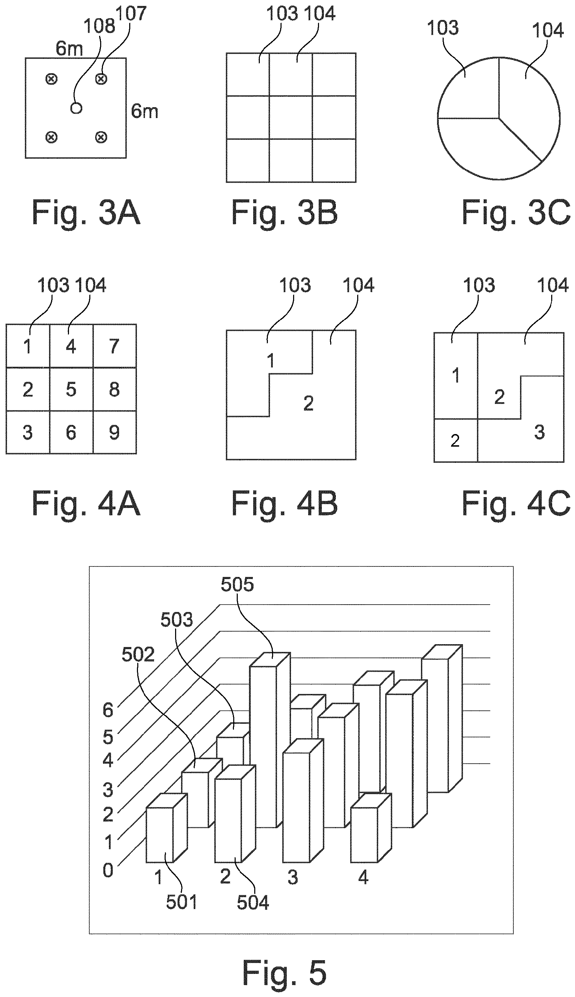

Weitere Beispiele in denen Größe und Form angepasst werden können:
- In eine Silo wie z.B. in Fig. 3A dargestellt kann ein Prozess an 1-3 Auslässen angeschlossen sein. Ein weitere Prozess ist an dem Verbleibenden Auslass angeschlossen. So kommt es zu unterschiedlichen genutzten Bereichen im Silo. Abhängig welche Auslässe gerade verwendet werden erfolgt die Messung nur in dem Bereich mit hoher Dynamik mit hoher Abtastung.
- Umgekehrt zum Beispiel der Entnahme kann die Zuführung auch über mehreren Befüll Stränge erfolgen. Abhängig über welcher Strang befüllt wird, wird der Bereich der überwacht wird angepasst.

Ein Silo kann auch Mobil sein, z.B. zuführen von Baustoffen auf Baustellen. Während des Transports ist das Silo liegend. Nach dem aufstellen bildet sich das Füllgut als eine Schiefe ebene aus. Der Sensor muss den gesamten Bereich überwachen. Wenn das Silo an der Baustelle wieder befüllt wird bildet sich ein klassischer Schüttkegel aus. Die Bereichsüberwachung passt sich an die neue Topologie an und erfasst die Dynamik des Füllkegels.

Erfindungsgemäß weist das Füllstandmessgerät eine Kommunikationseinheit auf, die eingerichtet ist zum Übertragen der berechneten Volumina oder der berechneten Füllhöhen an eine externe Steuer- und Auswerteeinheit.

Gemäß einer weiteren Ausführungsform ist die Kommunikationseinheit eingerichtet, bei einer Datenübertragung an die externe Steuer- und Auswerteeinheit nur eine Untermenge der berechneten Volumina oder Füllhöhen zu übertragen.

Beispielsweise ist die Kommunikationseinheit eingerichtet, ein berechnetes Volumen oder eine berechnete Füllhöhe nur dann an die externe Steuer- und Auswerteeinheit zu übertragen, wenn sich die im Vergleich zur vorherigen Berechnung verändert hat oder stärker verändert hat als ein vorbestimmter Schwellwert.

Gemäß einer weiteren Ausführungsform ist das Füllstandmessgerät zum Anschluss an eine 4 bis 20 mA Zweileiter-Schnittstelle und/oder zur Funkübertragung der berechneten Volumina oder Füllhöhen eingerichtet.

Gemäß einer weiteren Ausführungsform befindet sich die Position des ersten Bereichs über einem Auslass oder unter einem Einlass des Behälters, in dem sich das Schüttgut befindet. Ebenso kann sich die Position des zweiten Bereichs ebenfalls über einem Auslass oder unter einem Einlass befinden.

Ein weiterer Aspekt der vorliegenden Offenbarung betrifft die Verwendung einer externe Steuer- und Auswerteeinheit mit einem Füllstandmessgerät, welche zur Visualisierung der vom Füllstandmessgerät übertragenen Volumina oder Füllhöhen eingerichtet ist.

Ein weiterer Aspekt der vorliegenden Offenbarung betrifft die Verwendung einer externen Steuer- und Auswerteeinheit für ein oben und im Folgenden beschriebenen Füllstandmessgerät, zur Visualisierung der vom Füllstandmessgerät übertragenen Volumina oder Füllhöhen.

Ein weiterer Aspekt der vorliegenden Offenbarung betrifft ein Verfahren zur Überwachung der Oberflächentopologie eines Schüttguts, bei dem ein erster Bereich der Oberfläche des Schüttguts sowie ein zweiter Bereich der Oberfläche des Schüttguts abgescannt werden, woraufhin ein erstes Volumen und/oder eine erste durchschnittliche Füllhöhe des Schüttguts, das sich unter dem ersten Bereich der Oberfläche des Schüttguts befindet, berechnet wird. Ebenso wird ein zweites Volumen und/oder eine zweite durchschnittliche Füllhöhe des Schüttguts, das sich unter dem zweiten Bereich der Oberfläche des Schüttguts befindet, berechnet.

Erfindungsgemäß werden die berechneten Volumina und/oder Füllhöhen dann an eine externe Steuer- und Auswerteeinheit übertragen.

Gemäß einer weiteren Ausführungsform erfolgt dann eine Visualisierung der vom Füllstandmessgerät übertragenen Volumina und/oder Füllhöhen auf der externen Steuer- und Auswerteeinheit.

Ein weiterer Aspekt der vorliegenden Offenbarung betrifft ein Programmelement, das, wenn es auf einem System zur Überwachung der Oberflächentopologie eines Schüttguts ausgeführt wird, das System (welches das oben und im Folgenden beschriebene Füllstandmessgerät und die oben und im Folgenden beschriebene Steuer- und Auswerteeinheit aufweist) anleitet, die oben beschriebenen Schritte durchzuführen.

Ein weiterer Aspekt der vorliegenden Offenbarung betrifft ein computerlesbares Medium, auf dem das oben beschriebene Programmelement gespeichert ist.

Im Folgenden werden mit Verweis auf die Figuren weitere Ausführungsformen der Erfindung beschrieben. Die Darstellungen in den Figuren sind schematisch und nicht maßstäblich. Werden in der Figurenbeschreibung die gleichen Bezugszeichen verwendet, so bezeichnen diese gleiche oder ähnliche Elemente.

### Kurze Beschreibung der Figuren

Fig. 1 zeigt ein Silo mit einem Füllstandmessgerät gemäß einer Ausführungsform.
Fig. 2 zeigt ein System zur Überwachung der Oberflächentopologie eines Schüttguts gemäß einer Ausführungsform.
Fig. 3A zeigt eine schematische Ansicht eines Silos von oben.
Fig. 3B zeigt eine Schüttgutoberfläche, die in neun Bereiche eingeteilt ist.
Fig. 3C zeigt eine runde Schüttgutoberfläche, die in drei Kreissegmente eingeteilt ist.
Fig. 4A zeigt neun abzuscannende Bereiche in einem Silo.
Fig. 4B zeigt zwei abzuscannende Bereiche in einem Silo.
Fig. 4C zeigt vier abzuscannende Bereiche in einem Silo.
Fig. 5 zeigt die Visualisierung der gemessenen Volumina oder durchschnittlichen Füllhöhen gemäß einer Ausführungsform.
Fig. 6 zeigt ein Flussdiagramm eines Verfahrens gemäß einer Ausführungsform.

### Detaillierte Beschreibung von Ausführungsformen

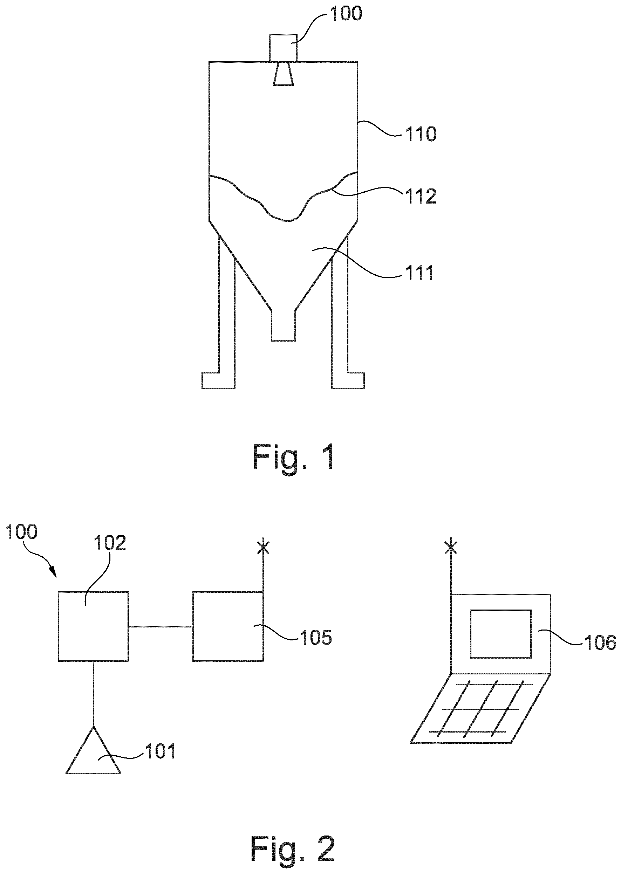

Fig. 1 zeigt einen Behälter 110 in Form eines Silos, in dem sich ein Schüttgut 111 befindet. Das Schüttgut 111 weist eine Oberfläche 112 auf, die im Regelfall unregelmäßig sein wird.

Im oberen Bereich des Silos 110 ist ein Füllstandmessgerät 100 angeordnet, beispielsweise ein Füllstandradargerät, das die Oberfläche 112 des Schüttguts 111 abscannen kann.

Das Füllstandmessgerät 100 ist zur zielgerichteten Profilüberwachung des Schüttguts 111 eingerichtet sowie zur reduzierten Datenübertragung. Die geringe Datenmenge kann erreicht werden, indem im Silo nicht das gesamte Oberflächenprofil mit einer hohen Auflösung (ähnlich einem Bild) erfasst wird, sondern indem das Silo in Bereiche unterteilt wird und für die Auswertung und Visualisierung nur diese Bereiche verwendet werden. Das Füllstandmessgerät ermittelt anhand seiner internen Rohdaten für jeden Bereich die tatsächliche Beladung des Segments und nicht das Profil. Damit sind die zu übertragenden Daten stark reduziert. Die Summe aus allen Bereichen ergibt dann das Gesamtvolumen.

Die Einteilung des Silos in die verschiedenen Bereiche ist abhängig vom Silo selbst und den Kundenforderungen an die Genauigkeit. Abhängig von der Größe des Silos und abhängig von den vorhandenen Ein- und Auslässen kann die Einteilung der Bereiche unterschiedliche Ausprägungen aufweisen. Beispiele hierfür sind in den Fig. 3A bis 3C gezeigt.

Fig. 3A zeigt schematisch ein Silo von oben gesehen, welches vier Auslässe 107 und einen Einlass 108 aufweist. Typische Dimensionen für ein solches Silo sind 6 m x 6 m.

Der Kunde hat nun die Möglichkeit, die Einteilung der abzuscannenden Bereiche frei zu wählen.

Im Beispiel der Fig. 3B ist das Silo in neun Bereiche unterteilt. Der erste Bereich 103 befindet sich in einer Ecke des Silos und der zweite Bereich 104 daneben. Beispielsweise weisen alle neun Bereiche denselben Grundriss und dieselbe Größe auf, beispielsweise eine quadratische Form mit einer Kantenlänge von 2 m.

Fig. 3C zeigt ein anderes Beispiel für die Aufteilung der abzuscannenden Bereiche am Beispiel eines runden Silos. Hier sind die Bereiche in Form von Kreisabschnitten beziehungsweise Kreissegmenten ausgebildet.

Die Bereiche im Silo können zusammenhängend sein oder auch verschiedene Geometrien annehmen, wie dies in den Fig. 4A bis 4C zu sehen ist. So können die Bereiche quadratisch oder rechteckig ausgebildet sein und alle dieselbe Größe aufweisen (vgl. Fig. 4A). Sie können aber auch sehr unterschiedliche Größen aufweisen, wie dies in den Fig. 4B und 4C zu sehen ist. Auch können sie unterschiedliche Formen aufweisen.

Im Beispiel der Fig. 4B kann der Kunde erkennen, ob der Bereich 103 bereits entleert ist und ob im Bereich 104 noch Material vorhanden ist. So kann eine Befüllung gestartet werden, wenn nur der Bereich 103 leer ist. Eine Einpunktmessung, die nur den Bereich 104 überwacht, würde zu einem Betriebsausfall im Bereich 103 führen, da der Bereich des Silos leer ist.

Im umgekehrten Fall kann im Bereich 103 die Einpunktmessung ein leeres Silo melden, obwohl noch Material im Segment 104 vorhanden ist. Dies kann zu einer Überfüllung des Silos führen beziehungsweise zu Chargenvermischung bei sensiblen Medien wie Lebensmittel.

Die Visualisierung der berechneten Volumina beziehungsweise Füllhöhen des Schüttguts im Bedientool der externen Steuer- und Auswerteeinheit kann wie in Fig. 5 dargestellt realisiert werden. Dies ist exemplarisch für rechteckige Segmente. Die Visualisierung kann aber auch durch Kreisabschnitte oder andere Formen erfolgen.

Um die Visualisierung zu realisieren, können die berechneten Daten über das HART-Protokoll an die externe Steuer- und Auswerteeinheit übermittelt werden. Hierzu steht zum einen der analoge Wert zur Verfügung sowie vier weitere Variablen. Somit kann das Gesamtvolumen zusammen mit den berechneten Volumendaten beziehungsweise Durchschnittsfüllhöhen von vier Bereichen zyklisch übermittelt werden. Die berechneten Daten der weiteren Bereiche können über eine azyklische Kommunikation über das HART-Protokoll übermittelt werden.

Gerade bei der azyklischen Kommunikation ist eine Datenkompression sinnvoll. So wird für ein Segment nur dann ein neuer Messwert übermittelt, wenn der Messwert eine Änderung erfahren hat.

Für den Kunden hat dieses Verfahren zwei Hauptnutzen. Zum einen erhält er die Information, wie viel Volumen im Silo ist und wie die Verteilung des Schüttguts im Silo aussieht. Zum anderen können die Historiendaten der Bewegung des Schüttguts in den verschiedenen Bereichen (hervorgerufen durch Befüllung und Entleerung) jeweils für sich und im Verhältnis zueinander ausgewertet werden. Hierfür kann künstliche Intelligenz zum Einsatz kommen. Somit sind die effiziente Nutzung des Silos und auch die Detektion bestimmter Zustände im Silo sichergestellt. Insbesondere lassen sich hierdurch Effekte wie "Bridging", "Arching", "Funneling" oder "Rat Holing" detektieren und/oder voraussagen.

Fig. 2 zeigt ein Messsystem zur Überwachung der Oberflächentopologie eines Schüttguts gemäß einer Ausführungsform. Das Messsystem weist ein Füllstandmessgerät 100 auf sowie eine externe Steuer- und Auswerteeinheit 106. Beide können zur Kommunikation mittels einer drahtgebundenen Schnittstelle (beispielsweise Zweileiter-Schnittstelle) und/oder einer drahtlosen Kommunikation ausgeführt sein, beispielsweise mittels Bluetooth oder APL.

Das Füllstandmessgerät 100 weist insbesondere eine Sensoreinheit 101 und eine Auswerteeinheit 102 auf sowie eine Kommunikationseinheit 105.

Das Füllstandmessgerät kann auch autark ausgeführt sein und über eine Batterie gespeist werden. Die Daten können in diesem Fall beispielsweise über einen mobilen Kommunikationskanal, wie LoRa, übertragen werden, bei dem die reduzierte Datenmenge auch hilfreich ist.

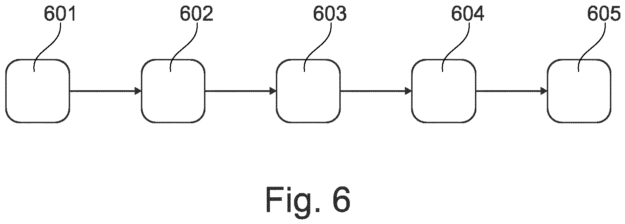

Fig. 6 zeigt ein Flussdiagramm eines Verfahrens gemäß einer Ausführungsform. In Schritt 601 erfolgt ein Abscannen eines ersten Bereichs der Oberfläche des Schüttguts. In Schritt 602 erfolgt ein Abscannen eines zweiten Bereichs der Oberfläche des Schüttguts. In Schritt 603 wird das Volumen und/oder die durchschnittliche Füllhöhe des Schüttguts unterhalb des ersten Bereichs berechnet und in Schritt 604 wird das Volumen beziehungsweise die durchschnittliche Füllhöhe des Schüttguts unter dem zweiten Bereich berechnet. In Schritt 605 werden die Berechnungsgrößen (Volumina/Füllhöhen) an eine externe Steuer- und Auswerteeinheit übertragen, welche die übertragenen Daten dann visualisieren kann.

Insbesondere kann die zu übertragende Information auf die wesentlichen Silobereiche reduziert werden. Hierbei handelt es sich beispielsweise um Bereiche, in welchen eine Änderung stattgefunden hat. Die Aufteilung der Bereiche kann von der Geometrie des Silos abhängen und von den Kundenanforderungen, wie Größe, Form, Einlässe, Auslässe.

Die Geometrie der Segmente ist grundsätzlich wählbar. Die Kommunikation kann über einen einfachen Datenkanal, wie HART, erfolgen, oder, alternativ, über eine drahtlose Schnittstelle. Aus den Historiendaten kann die Siloauslastung überwacht und optimiert werden. So kann festgestellt werden, ob über einen Auslass des Silos besonders viel Schüttgut entnehmen wird. Auch kann festgestellt werden, ob ein Auslass verstopft ist, beispielsweise da das Füllstandmessgerät feststellt, dass sich das Volumen in dem dem Auslass zugeordneten Bereich nie unter eine gewisse Menge begibt.

Durch Auswertung der Historiendaten der Bereiche für sich und in Kombination zu anderen Bereichen können Anhaftungen detektiert werden, Tunnelbildung detektiert werden, einseitige Ladung detektiert werden sowie Totzonen detektiert werden.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandmessgerät (100), eingerichtet zur Überwachung der Oberflächentopologie eines Schüttguts (111) oder einer Flüssigkeit, aufweisend:
eine Sensoreinheit (101), eingerichtet zum Abscannen eines ersten Bereichs (103) der Oberfläche des Schüttguts und eines zweiten Bereichs (104) der Oberfläche des Schüttguts; und **dadurch gekennzeichnet, dass** es weiterhin Folgendes aufweist:
eine Auswerteeinheit (102), eingerichtet zum Berechnen eines ersten Volumens und/oder einer ersten Masse und/oder einer ersten durchschnittlichen Füllhöhe des Schüttgutes, das sich unter dem ersten Bereich der Oberfläche des Schüttguts befindet, und eines zweiten Volumens und/oder einer zweiten Masse und/oder einer zweiten durchschnittlichen Füllhöhe des Schüttgutes, das sich unter dem zweiten Bereich der Oberfläche des Schüttguts befindet;
eine Kommunikationseinheit (105), eingerichtet zum Übertragen der berechneten Volumina oder Füllhöhen an eine externe Steuer- und Auswerteeinheit (106).

2. Füllstandmessgerät (100) nach Anspruch 1,
wobei die Sensoreinheit (101) eingerichtet ist, den ersten Bereich mit einer ersten Auflösung abzuscannen und den zweiten Bereich mit einer zweiten Auflösung abzuscannen, die geringer ist als die erste Auflösung.

3. Füllstandmessgerät (100) nach einem der vorhergehenden Ansprüche,
wobei der erste Bereich (103) eine andere Größe aufweist als der zweite Bereich (104).

4. Füllstandmessgerät (100) nach einem der vorhergehenden Ansprüche,
wobei der erste Bereich (103) eine andere Form aufweist als der zweite Bereich (104).

5. Füllstandmessgerät (100) nach einem der vorhergehenden Ansprüche,
wobei die Kommunikationseinheit (105) eingerichtet ist, bei einer Datenübertragung an die externe Steuer- und Auswerteeinheit (106) nur eine Untermenge der berechneten Volumina oder Füllhöhen zu übertragen.

6. Füllstandmessgerät (100) nach einem der vorhergehenden Ansprüche,
wobei die Kommunikationseinheit (105) eingerichtet ist, ein berechnetes Volumen oder eine berechnete Füllhöhe nur dann an die externe Steuer- und Auswerteeinheit (106) zu übertragen, wenn sich diese im Vergleich zur vorherigen Berechnung verändert hat.

7. Füllstandmessgerät (100) nach einem der vorhergehenden Ansprüche,
eingerichtet zum Anschluss an eine 4-20 mA Zweileiterschnittstelle oder zur Funkübertragung der berechneten Volumina oder Füllhöhen.

8. Füllstandmessgerät (100) nach einem der vorhergehenden Ansprüche,
wobei sich die Position des ersten Bereichs (103) über einem Auslass (107) oder unter einem Einlass (108) eines Behälters, in dem das Schüttgut gespeichert ist, befindet.

9. Verwendung einer externe Steuer- und Auswerteeinheit (106) mit einem Füllstandmessgerät (100) nach einem der vorhergehenden Ansprüche,
eingerichtet zur Visualisierung der vom Füllstandmessgerät übertragenen Volumina oder Füllhöhen.

10. Verfahren zur Überwachung der Oberflächentopologie eines Schüttguts, aufweisend die folgenden Schritte:
Abscannen eines ersten Bereichs (103) der Oberfläche des Schüttguts und eines zweiten Bereichs (104) der Oberfläche des Schüttguts;
Berechnen eines ersten Volumens und/oder einer ersten Masse und/oder einer ersten durchschnittlichen Füllhöhe des Schüttgutes, das sich unter dem ersten Bereich der Oberfläche des Schüttguts befindet, und eines zweiten Volumens und/oder einer zweiten Masse und/oder einer zweiten durchschnittlichen Füllhöhe des Schüttgutes, das sich unter dem zweiten Bereich der Oberfläche des Schüttguts befindet;
Übertragen der berechneten Volumina oder Füllhöhen an eine externe Steuer- und Auswerteeinheit (106).

11. Verfahren nach Anspruch 10, weiter aufweisend den Schritt:
Visualisieren der vom Füllstandmessgerät übertragenen Volumina oder Füllhöhen.

12. Programmelement, das, wenn es auf einem System zur Überwachung der Oberflächentopologie eines Schüttguts ausgeführt wird, das System anleitet, die Schritte nach einem oder mehreren der Ansprüche 10 bis 11 durchzuführen.

13. Computerlesbares Medium, auf dem ein Programmelement nach Anspruch 12 gespeichert ist.

## Claims

1. A level measuring device (100), configured to monitor the surface topology of a bulk material (111) or liquid, comprising:
a sensor unit (101) configured to scan a first area (103) of the surface of the bulk material and a second area (104) of the surface of the bulk material; and **characterized in that** it comprises the following:
an evaluation unit (102) configured to calculate a first volume and/or a first mass and/or a first average filling height of the bulk material located below the first area of the surface of the bulk material, and a second volume and/or a second mass and/or a second average filling height of the bulk material located below the second area of the surface of the bulk material;
a communication unit (105), configured to transmit the calculated volumes or fill levels to an external control and evaluation unit (106).

2. The level measuring device (100) according to claim 1,
wherein the sensor unit (101) is configured to scan the first area with a first resolution and to scan the second area with a second resolution that is lower than the first resolution.

3. The level measuring device (100) according to one of the preceding claims,
wherein the first area (103) has a different size than the second area (104).

4. The level measuring device (100) according to one of the preceding claims,
wherein the first region (103) has a different shape than the second region (104).

5. The level measuring device (100) according to one of the preceding claims,
wherein the communication unit (105) is configured to transmit only a subset of the calculated volumes or fill levels during a data transmission to the external control and evaluation unit (106).

6. The level measuring device (100) according to one of the preceding claims,
wherein the communication unit (105) is configured to transmit a calculated volume or a calculated filling level to the external control and evaluation unit (106) only if it has changed compared to the previous calculation.

7. The level measuring device (100) according to any one of the preceding claims,
configured to connect to a 4-20 mA two-wire interface or for radio transmission of the calculated volumes or fill levels.

8. The level measuring device (100) according to any one of the preceding claims,
wherein the position of the first region (103) is above an outlet (107) or below an inlet (108) of a container in which the bulk material is stored.

9. Use of an external control and evaluation unit (106) with a level measuring device (100) according to one of the preceding claims,
configured to visualize the volumes or levels transmitted by the level meter.

10. Method for monitoring the surface topology of a bulk material, comprising the following steps:
scanning a first region (103) of the surface of the bulk material and a second region (104) of the surface of the bulk material;
calculating a first volume and/or a first mass and/or a first average fill height of the bulk material located below the first area of the surface of the bulk material, and a second volume and/or a second mass and/or a second average fill height of the bulk material located below the second area of the surface of the bulk material;
transferring the calculated volumes or fill levels to an external control and evaluation unit (106).

11. Method according to claim 10, further comprising the step:
visualizing the volumes or levels transmitted by the level meter.

12. Program element that, when executed on a system for monitoring the surface topology of a bulk material, directs the system to perform the steps of one or more of claims 10 to 11.

13. A computer-readable medium on which is stored a program element according to claim 12.

## Revendications

1. Appareil de mesure de niveau de remplissage (100), configuré pour surveiller la topologie de surface d'un matériau en vrac (111) ou d'un liquide, comportant :
une unité de capteur (101), configurée pour balayer une première zone (103) de la surface du matériau en vrac et une seconde zone (104) de la surface du matériau en vrac ;
et **caractérisé en ce qu'**il comporte en outre les éléments suivants :
une unité d'évaluation (102), configurée pour calculer un premier volume et/ou une première masse et/ou une première hauteur de remplissage moyenne du matériau en vrac qui se situe en dessous de la première zone de la surface du matériau en vrac, et un second volume et/ou une seconde masse et/ou une seconde hauteur de remplissage moyenne du matériau en vrac qui se situe en dessous de la seconde zone de la surface du matériau en vrac ;
une unité de communication (105), configurée pour transmettre les volumes ou hauteurs de remplissage calculés à une unité de commande et d'évaluation externe (106).

2. Appareil de mesure de niveau de remplissage (100) selon la revendication 1,
dans lequel l'unité de capteur (101) est configurée pour balayer la première zone avec une première résolution et pour balayer la seconde zone avec une seconde résolution qui est inférieure à la première résolution.

3. Appareil de mesure de niveau de remplissage (100) selon l'une des revendications précédentes,
dans lequel la première zone (103) a une taille différente de celle de la seconde zone (104).

4. Appareil de mesure de niveau de remplissage (100) selon l'une des revendications précédentes,
dans lequel la première zone (103) a une forme différente de celle de la seconde zone (104).

5. Appareil de mesure de niveau de remplissage (100) selon l'une des revendications précédentes,
dans lequel l'unité de communication (105) est configurée pour transmettre uniquement un sous-ensemble des volumes ou hauteurs de remplissage calculés pendant une transmission de données à l'unité de commande et d'évaluation externe (106).

6. Appareil de mesure de niveau de remplissage (100) selon l'une des revendications précédentes,
dans lequel l'unité de communication (105) est configurée pour transmettre un volume ou une hauteur de remplissage calculé à l'unité de commande et d'évaluation externe (106) uniquement si celui-ci a changé par rapport au calcul précédent.

7. Appareil de mesure de niveau de remplissage (100) selon l'une des revendications précédentes,
configuré pour être raccordé à une interface bifilaire 4-20 mA ou pour la transmission radio des volumes ou hauteurs de remplissage calculés.

8. Appareil de mesure de niveau de remplissage (100) selon l'une des revendications précédentes,
dans lequel la position de la première zone (103) est située au-dessus d'une sortie (107) ou au-dessous d'une entrée (108) d'un contenant dans lequel le matériau en vrac est stocké.

9. Utilisation d'une unité de commande et d'évaluation externe (106) avec un appareil de mesure de niveau de remplissage (100) selon l'une des revendications précédentes,
configurée pour visualiser les volumes ou hauteurs de remplissage transmis par l'appareil de mesure de niveau de remplissage.

10. Procédé de surveillance de la topologie de surface d'un matériau en vrac, comportant les étapes suivantes consistant à :
balayer une première zone (103) de la surface du matériau en vrac et une seconde zone (104) de la surface du matériau en vrac ;
calculer un premier volume et/ou une première masse et/ou une première hauteur de remplissage moyenne du matériau en vrac qui se situe en dessous de la première zone de la surface du matériau en vrac, et un second volume et/ou une seconde masse et/ou une seconde hauteur de remplissage moyenne du matériau en vrac qui se situe en dessous de la seconde zone de la surface du matériau en vrac ;
transmettre les volumes ou hauteurs de remplissage calculés à une unité de commande et d'évaluation externe (106).

11. Procédé selon la revendication 10, comportant en outre l'étape consistant à :
visualiser les volumes ou hauteurs de remplissage transmis par l'appareil de mesure de niveau de remplissage.

12. Élément de programme qui, lorsqu'il est exécuté sur un système de surveillance de la topologie de surface d'un matériau en vrac, amène le système à mettre en oeuvre les étapes selon une ou plusieurs des revendications 10 à 11.

13. Support lisible par ordinateur sur lequel est stocké un élément de programme selon la revendication 12.
